# FASCICULE DE BREVET EUROPEEN

(11) **EP 0 363 328 B1**
(45) Date de publication et mention de la délivrance du brevet: **19.05.1993**
(21) Numéro de dépôt: 89810759.4
(22) Date de dépôt: 05.10.1989
(51) Int. Cl.: B23B 31/30

(54) **Broche de machine-outil**
Werkzeugmaschinenspindel
Machine tool spindle

(30) Priorité: 06.10.1988 CH 3721/88
(43) Date de publication de la demande: 11.04.1990
(73) Titulaire: Schäublin S.A., CH-2735 Bévilard (CH)
(72) Inventeur: Grosjean, Florian, CH-2735 Malleray (CH)
(74) Mandataire: Fischer, Franz Josef

(56) Documents cités:
- DE-A- 3 325 880
- US-A- 2 157 892
- US-A- 3 020 057

## Description

La présente invention se rapporte de manière générale à une broche de machine-outil comportant un bâti, un corps de broche tournant dans le bâti et un dispositif de serrage associé au corps de broche.

On utilise des broches de ce genre soit comme poupée dans les tours, soit comme porte-outil lorsqu'il s'agit de supporter un outil tournant et de l'entraîner en rotation. Dans ce dernier cas, les broches peuvent se trouver associées à des machines-outils de différents types et notamment à des centres d'usinage complexe.

On constate actuellement, surtout dans le domaine du tournage, une tendance de plus en plus marquée à usiner avec des vitesses de coupe élevées. Ce mode de faire exige que les machines-outils soient équipées de broches aptes à supporter de hautes vitesses de rotation sans échauffement ni vibration, de façon à conserver une haute qualité de l'usinage. En même temps, on demande toujours plus d'universalité dans le travail des machines-outils et notamment des tours, ce qui suppose un équipement varié et facilement interchangeable. Les broches doivent donc comporter des moyens de fixation de type universel.

Dans les broches connues jusqu'à maintenant, la commande par air comprimé de l'ouverture et de la fermeture de la pince, supportant soit la pièce à usiner ou la barre de matériau, ou encore un outil, n'a pas été solutionnée de manière permettant d'atteindre facilement les vitesses maximales que l'on désire obtenir. En général, la pince proprement dite est fixée à l'extrémité d'une douille de serrage, appelée également tube de serrage, qui est mobile axialement dans le corps de broche. Cette douille est solidaire, à son extrémité arrière, d'un piston mobile dans un cylindre, qui tourne avec la broche, dans un boîtier d'alimentation en fluide. Toutefois, cet agencement et son raccordement à une source d'air comprimé sont cause, dans les machines connues, de vibrations qui entraînent elles-mêmes des échauffements et des défauts d'équilibrage inadmissibles.

On connaît déjà, par les documents US-3,020,057 (Gamet) et DE-33 25 880 (Leidenfrost) des dispositifs capables de commander au moyen d'un fluide sous pression des pistons se déplaçant dans des cylindres supportés par une broche tournant autour de son axe. Il s'agit toutefois d'une alimentation en huile sous pression et les constructions prévues comportent un organe de distribution qui est combiné à un palier et dont le diamètre excède celui du palier. Ces constructions ne sont pas conçues pour un fonctionnement à vitesse élevée, l'utilisation d'un liquide de commande interdisant de telles applications.

La présente invention a pour objet une broche de machine-outil comportant un bâti, un corps de broche tournant dans le bâti sur deux paliers à roulement espacés axialement l'un de l'autre, et un dispositif de serrage associé au corps de broche, et comportant lui-même un piston mobile dans un cylindre et des moyens d'alimentation du cylindre en fluide de commande, les dits moyens d'alimentation comportant un distributeur placé entre les dits paliers dans le bâti, relié, d'une part, à des conduits fixes d'admission et d'evacuation percés dans le bâti et, d'autre part, à des conduits rotatifs correspondant aux conduits fixes et ménagés dans le corps de broche, ledit distributeur entourant coaxialement le corps de broche.

Une broche de ce genre est connue notamment par le document US-3 020 057 susmentionné.

L'invention vise à remédier aux inconvénients et aux défauts des dispositifs connus en créant une broche de machine-outil perfectionnée, dans laquelle des moyens de commande du piston par air comprimé constituent un ensemble compact, centré et équilibré par rapport à l'axe du corps de broche, permettant une réduction des masses en mouvement rotatif.

L'invention vise également à créer une construction permettant d'atteindre ces objectifs tout en étant adaptable aussi bien à des poupées de tour qu'à des broches porte-outils dans des centres d'usinage de construction variée.

Dans ce but, la broche de machine-outil selon l'invention est caractérisée en ce que le fluide de commande est de l'air comprimé et ledit distributeur consiste en une pièce unique fixée dans un alésage du bâti et ayant une surface extérieure cylindrique de même diamètre qu'une surface correspondante de la partie fixe de l'un des dits paliers.

Du fait que les moyens d'alimentation ont pu être logés entre les paliers du corps de broche, l'équilibrage de la broche est possible d'une façon parfaite. En outre, la possibilité de faire passer les conduits d'alimentation et d'évacuation d'air comprimé à travers le corps de broche jusqu'à l'arrière de la poupée où ils se raccordent à un cylindre qui est placé en porte-à-faux derrière la poupée, tout en étant de courte longueur, donne une liberté considérable en ce qui concerne le dimensionnement et la disposition du cylindre et du piston de commande.

On va décrire ci-après, à titre d'exemple, pour montrer comment l'invention peut être réalisée, une forme d'exécution d'une poupée de tour construite selon l'invention.

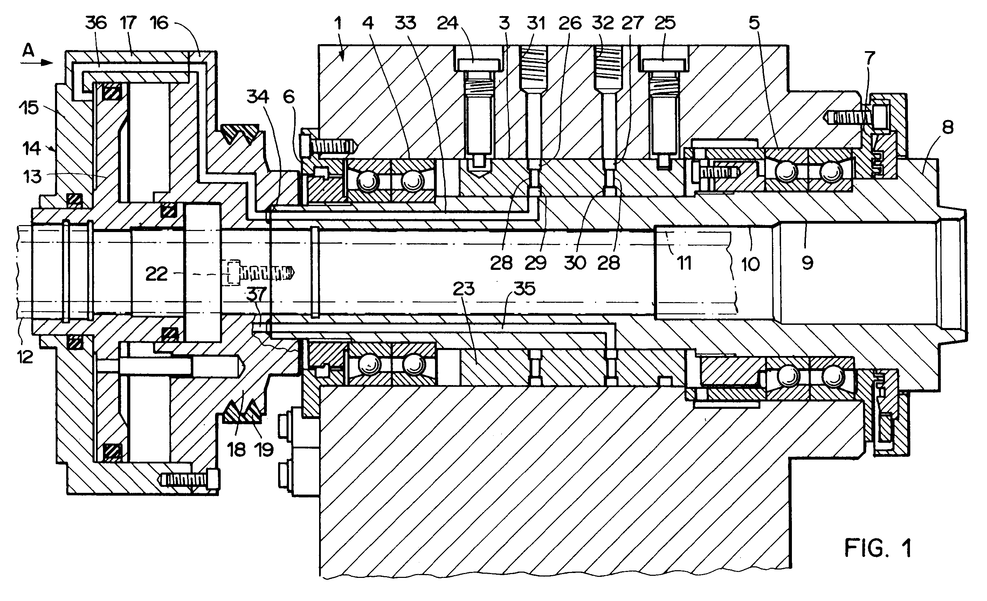

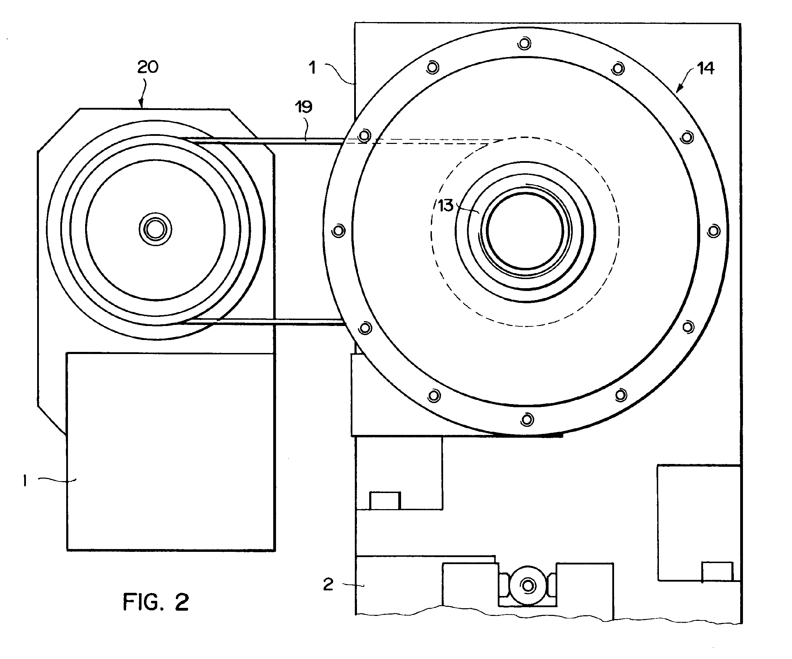

Au dessin, la fig. 1 est une vue en coupe axiale de cette poupée de tour, et la fig. 2 une vue en élévation frontale dans le sens de la flèche A de la fig. 1.

On voit au dessin le bâti de poupée 1 qui est ajusté et fixé sur l'embase 2 d'un tour, ce tour étant conçu de manière à usiner des pièces à l'extrémité antérieure d'une barre de matériau qui traverse la poupée et qui est fixée et entraînée en rotation par la broche, dont on va décrire maintenant les éléments essentiels. Le bâti 1 comporte un passage cylindrique 3 dans lequel sont montés deux paliers à billes doubles 4 et 5 et à l'extérieur de ces paliers des dispositifs auxiliaires 6 et 7 de positionnement et de retenue d'huile. Les paliers 4 et 5 servent à supporter un corps de broche 8 dont la construction est standardisée et qui comporte, notamment à son extrémité avant, des alésages 9 et 10 agencés de façon à recevoir un cône de serrage (non représenté) coopérant avec une pince permettant la fixation au corps de broche des pièces à usiner ou de l'extrémité avant d'une barre à usiner logée à l'intérieur du corps de broche 8. Cette pince est reliée, de façon connue en soi, à une douille de serrage 11 qui est une pièce tubulaire traversant l'alésage interne du corps de broche 8 et fixée, par l'intermédiaire d'un manchon fileté 12, à un piston 13 qui est situé en arrière du bâti 1. Ce piston 13 est engagé à l'intérieur d'un cylindre 14 constitué d'un fond arrière 15, d'un fond avant 16 et d'une paroi latérale circulaire 17, d'une pièce avec le fond 15. Ce fond antérieur 16 est solidaire d'une partie circulaire 18 qui forme une poulie et qui est reliée par une courroie 19 à un moteur, désigné de façon générale par 20, fixé sur une console 21.

Ainsi, le cylindre 14 s'étend en porte-à-faux à l'arrière du corps de broche 8 auquel il est fixé par des vis 22, mais, comme on le verra, la longueur du porte-à-faux et la valeur des masses ainsi supportées sont maintenues à des valeurs minimales grâce à la disposition particulière prévue pour les moyens d'alimentation du cylindre en air comprimé.

Ces moyens comportent essentiellement un distributeur 23 qui est une pièce tubulaire, à profil rectangulaire, fixée dans l'alésage 3 par le moyen de vis à pivot 24 et 25. Cette pièce est centrée par rapport à l'alésage 3, par un léger chassage. Son alésage interne est ajusté avec une précision de quelques micromètres. Le distributeur 23 comporte, dans sa face cylindrique externe, deux gorges 26 et 27 de profil rectangulaire, ménagées sur le pourtour de la face externe, à une certaine distance l'une de l'autre. Dans le fond de chacune de ces gorges 26 et 27 sont ménagés des passages radiaux 28 qui aboutissent dans le fond de gorges internes 29 et 30, ménagées elles-mêmes dans l'alésage interne de la pièce 23 aux mêmes cotes axiales que les gorges 26 et 27.

Les gorges 26 et 27 sont alimentées, à travers le bâti 1, par des conduits 31 et 32 percés dans le bâti 1 et dont l'extrémité supérieure est raccordée par des moyens non représentés à une vanne d'inversion reliée elle-même à une source d'air comprimé et à une ouverture d'évacuation.

Comme on le voit à la fig. 1, la gorge 29 communique avec un conduit 33 formé d'une suite de perçages ménagés dans le corps de broche 8 et aboutissant à un orifice 34 dans la face arrière du corps de broche 8. De même, la gorge 30 communique avec un conduit 35, également formé d'une suite de perçages aboutissant dans la face 34 du corps de broche 8. Dans les parois du cylindre 14 sont également ménagés deux conduits 36 et 37, formés de suites de perçages, raccordés aux conduits 33 et 35 par des joints d'étanchéité et aboutissant l'un (33) dans la paroi de fond arrière du cylindre 14 et l'autre (35) dans la paroi de fond avant de ce cylindre.

Ainsi, on a pu conduire les passages d'air comprimé à travers le corps de broche à l'intérieur de l'un des paliers de la poupée sans augmenter le diamètre du corps de broche, ce qui a permis de supprimer tout élément de distribution en porte-à-faux et de réduire la masse des corps en mouvement rotatif situés à l'extérieur du bâti.

D'autre part, les trous d'amenée d'air dans le distributeur 23 sont fortement espacés l'un de l'autre, de sorte que l'on peut tolérer un jeu entre le distributeur et la pièce en mouvement relatif avec lui. Ceci a pour résultat la suppression des risques de grippage sans nuire à la sécurité du fonctionnement par suite de chute de pression intempestive. Le jeu est de quelques centièmes de millimètres. Cet élément s'ajoute aux effets de la diminution des masses et de la réduction du porte-à-faux et contribue également à de meilleures conditions pour tourner à des vitesses élevées et maintenir la précision d'usinage.

L'agencement décrit permet un montage rationnel des différents éléments de la construction. Une fois que la broche 8 a été engagée dans le palier antérieur 5 et verrouillée, le distributeur 23 est engagé dans l'alésage 3 et bloqué, puis le palier 4 est mis en place. Ainsi, l'espace axial entre les paliers est utilisé judicieusement.

Ces particularités permettent à la broche décrite de répondre aux exigences actuelles de haute vitesse de rotation, de haute précision et d'universalité avec une construction simple et robuste ne reposant que sur deux paliers. La diminution importante du porte-à-faux et celle des masses en rotation notamment favorise un fonctionnement exempt de vibrations, créant ainsi des conditions de travail optimales pour l'obtention d'un état de surface de haute qualité. Le corps de broche peut être équipé d'un nez de broche normalisé permettant, par l'adaptation de différents manchons, l'utilisation de nombreux moyens de serrage différents sans nécessiter de changer la broche.

D'autre part, le passage traversant, ménagé à l'intérieur du corps de broche 8, permet le travail à partir d'une barre de matériau.

Le cylindre de serrage 14 fonctionne à double effet : en tirant et en poussant, ce qui favorise également l'emploi de moyens de serrage nombreux et variés. Cependant, il est bien entendu que des moyens de serrage agissant sous l'effet d'un ressort et dans lesquels l'air comprimé n'est utilisé que pour desserrer la pince peuvent également être prévus dans une forme d'exécution différente de celle qui est représentée au dessin tout en utilisant un distributeur fixe occupant utilement l'espace libre entre les deux paliers supportant la broche.

## Revendications

1. Broche de machine-outil comportant un bâti (1), un corps de broche (8) tournant dans le bâti (1) sur deux paliers à roulement (4, 5) espacés axialement l'un de l'autre, et un dispositif de serrage (11-14) associé au corps de broche, et comportant lui-même un piston (13) mobile dans un cylindre (14) et des moyens d'alimentation (29, 30, 33, 35) du cylindre en fluide de commande, les dits moyens d'alimentation comportant un distributeur (23) placé entre les dits paliers (4, 5) dans le bâti (1), relié, d'une part, à des conduits fixes (31, 32) d'admission et d'evacuation percés dans le bâti (1) et, d'autre part, à des conduits rotatifs (33, 35) correspondant aux conduits fixes et ménagés dans le corps de broche (8), ledit distributeur (23) entourant coaxialement le corps de broche, caractérisée en ce que le fluide de commande est de l'air comprimé et ledit distributeur (23) consiste en une pièce unique fixée dans un alésage du bâti (1) et ayant une surface extérieure cylindrique de même diamètre qu'une surface correspondante (3) de la partie fixe de l'un des dits paliers (4).

2. Broche selon la revendication 1, caractérisée en ce que le distributeur (23) comporte un alésage cylindrique avec deux gorges circulaires (27, 30) internes ménagées dans cet alésage, une surface externe cylindrique pourvue de deux gorges circulaires (26, 27) externes et des perçages radiaux (28) ménagés entre chacune des gorges externes et une gorge interne correspondante.

3. Broche selon la revendication 1, caractérisée en ce que le cylindre (14) est fixé contre une face arrière du corps de broche (8), les dits conduits rotatifs (33, 35) du corps de broche étant raccordés avec des conduits correspondants (36, 37) ménagés dans les parois du cylindre.

4. Broche selon la revendication 2, caractérisée en ce que le piston (13) est à double effet et en ce que les parois du cylindre (14) comportent deux conduits (36, 37) aboutissant l'un sur un des côtés du piston, l'autre sur l'autre.

5. Broche selon la revendication 1, caractérisée en ce que les moyens de serrage comportent une douille de serrage (11) logée dans le corps de broche (8) et fixée au piston (13), de manière à ménager un passage central traversant toute la broche et permettant à cette dernière de guider une barre de matériau à usiner.

6. Broche selon la revendication 1 ou la revendication 4, caractérisée en ce que son bâti constitue le bâti de la poupée d'un tour.

7. Broche selon l'une quelconque des revendications 1 à 4, caractérisée en ce que le dispositif de serrage, associé au corps de broche, est agencé de manière à maintenir, dans une position coaxiale à la broche, un porte-outil amovible.

## Patentansprüche

1. Werkzeugmaschinenspindel, welche einen Maschinenrahmen (1), einen Spindelkörper (8), welcher im Maschinenrahmen (1) in zwei Wälzlager (4, 5), die axial voneinander beabstandet sind, drehbar gelagert ist, und eine Spanneinrichtung (11 - 14) enthält, die mit dem Spindelkörper verbunden ist, die ihrerseits einen Kolben (13), welcher in einem Zylinder (14) bewegbar ist, und Zuführmittel (29, 30, 33, 35) zum Zylinder für ein fluidisches Steuermittel aufweist, wobei die genannten Zuführmittel ein Verteilstück (23) enthalten, welches zwischen den genannten Wälzlagern (4, 5) im Maschinenrahmen (1) angeordnet ist, und welches einerseits mit festen Zuführungen (31, 32) zur Beaufschlagung und zum Ablass verbunden ist, die im Maschinenrahmen (1) eingebohrt sind, und andererseits mit rotierenden Zuführungen (33, 35) verbunden ist, die mit den festen Zuführungen übereinstimmen und im Spindelkörper (8) vorgesehen sind, wobei das genannte Verteilstück (23) den Spindelkörper koaxial umfasst, dadurch gekennzeichnet, dass das fluidische Steuermittel komprimierte Luft ist, und das genannte Verteilstück (23) aus einem einzigen Stück besteht, befestigt in einer Bohrung des Maschinenrahmens (1), und eine äussere zylindrische Oberfläche mit gleichem Durchmesser aufweist, wie eine entsprechende Oberfläche (3) des festen Teils von einem der genannten Wälzlager (4).

2. Spindel nach Anspruch 1, dadurch gekennzeichnet, dass das Verteilstück (23) eine zylindrische Bohrung mit zwei ringförmigen Rillen (29, 30), welche innen in dieser Bohrung angebracht sind, eine äussere zylindrische Oberfläche, versehen mit zwei äusseren ringförmigen Rillen (26, 27), und radiale Löcher (28) umfasst, welche zwischen jeder der äusseren Rillen und einer entsprechenden inneren Rille angebracht sind.

3. Spindel nach Anspruch 1, dadurch gekennzeichnet, dass der Zylinder (14) gegen eine hintere Stirnfläche des Spindelkörpers (8) befestigt ist, und die rotierenden Zuführungen (33, 35) des Spindelkörpers mit den entsprechenden Zuführungen (36, 37), angebracht in den Wandungen des Zylinders, verbunden sind.

4. Spindel nach Anspruch 2, dadurch gekennzeichnet, dass der Kolben (13) doppeltwirkend ist, und dass die Wandungen des Zylinders (14) zwei Zuführungen (36, 37) enthält, wovon eine auf die eine Seite des Kolbens und die andere auf die andere hinführt.

5. Spindel nach Anspruch 1, dadurch gekennzeichnet, dass die Mittel zur Spannung eine Spannhülse (11) enthalten, welche im Spindelkörper (8) untergebracht und am Kolben (13) befestigt ist, so dass ein zentraler Durchgang, welcher die ganze Spindel durchquert, entsteht, in welchem Durchgang eine maschinell zu bearbeitende Materialstange geführt werden kann.

6. Spindel nach Anspruch 1 oder nach Anspruch 4, dadurch gekennzeichnet, dass ihr Maschinenrahmen den Maschinenrahmen eines Drehspindelstockes bildet.

7. Spindel nach einem der Ansprüche 1 bis 4, dadurch gekennzeichnet, dass die Spanneinrichtung, welche mit dem Spindelkörper verbunden ist, derart eingerichtet ist, dass in einer koaxialen Lage zur Spindel ein abnehmbarer Werkzeughalter festhaltbar ist.

## Claims

1. Machine tool spindle comprising a frame (1), a spindle body (8) turning in the frame (1) on two rolling bearings (4, 5) spaced axially one from the other, and a work chucking fixture (11-14) associated with the spindle body, and itself comprising a piston (13) movable in a cylinder (14) and means (29, 30, 33, 35) of feeding the cylinder with actuating fluid, the said feed means comprising a distributor (23) placed between the said bearings (4, 5) in the frame (1), connected on the one hand to fixed admission and evacuation pipes (31, 32) pierced in the frame (1), and, on the other hand to rotary pipes (33, 35) corresponding to the fixed pipes and arranged in the spindle body (8), the said distributor (23) surrounding coaxially the spindle body, characterized in that the actuating fluid is compressed air and the said distributor (23) consists of a single piece fixed in a bore of the frame (1) and having a cylindrical exterior surface of the same diameter as a corresponding surface (3) of the fixed part of one of the said bearings (4).

2. Spindle according to claim 1, characterized in that the distributor (23) has a cylindrical bore with two internal circular grooves (27, 30) <sic. (29, 30)> arranged in this bore, a cylindrical external surface provided with two external circular grooves (26, 27) and radial drillings (28) arranged between each of the external grooves and a corresponding internal groove.

3. Spindle according to claim 1, characterized in that the cylinder (14) is fastened to a rear wall of the spindle body (8), the said rotary pipes (33, 35) of the spindle body being linked with the corresponding pipes (36, 37) arranged in the walls of the cylinder.

4. Spindle according to claim 2, characterized in that the piston (13) is a ring piston and in that the walls of the cyclinder have two pipes (36, 37) one abutting one of the sides of the piston, the other the other side.

5. Spindle according to claim 1, characterized in that the chucking means comprise a collet (11) accomodated in the spindle body (8) and fixed to the piston (13), in a manner to arrange a central passage crossing the whole spindle and permitting the latter to guide a bar of material to be machined.

6. Spindle according to claim 1 or claim 4, characterized in that its frame constitutes the frame of the stockhead of a lathe.

7. Spindle according to one of the claims 1 to 4, characterized in that the chucking device, associated with the spindle body, is arranged in a manner to hold a removable machine tool in a position coaxial to the spindle.
